# EUROPEAN PATENT SPECIFICATION

(11) **EP 1 749 658 B1**
(45) Date of publication and mention of the grant of the patent: **15.04.2009**
(21) Application number: 06010876.8
(22) Date of filing: 26.05.2006
(51) Int. Cl.: B32B 37/12, B32B 38/10, B32B 37/20

(54) **Apparatus for applying an adhesive substance to a fabric strip**
Vorrichtung zum Aufbringen eines Klebstoffes auf einen Gewebestreifen
Appareil pour appliquer une substance adhésive sur une bande de tricot

(30) Priority: 25.07.2005 IT MI20051433
(43) Date of publication of application: 07.02.2007
(73) Proprietor: MACPI PRESSING DIVISION S.P.A., 25036 Palazzolo Sull'Oglio BS (IT)
(72) Inventor: Cartabbia, Giovanni MACPI PRESSING DIVISION S.p.A., 25036 Palazzolo sull'Oglio (Brescia) (IT)
(74) Representative: Cicogna, Franco

(56) References cited:
- DE-A1- 4 314 713
- JP-A- 6 091 767
- US-A- 5 851 342
- US-A- 5 868 892

## Description

### BACKGROUND OF THE INVENTION

The present invention relates to an apparatus for applying an adhesive substance to a fabric strip.

In order to stabilize the edge of a fabric piece to be used for making cloth articles of manufacture, to prevent the fabric from ragging or being damaged at the edge thereof, a lot of different systems, such as an application of an adhesive strip, are conventionally used.

Such a stabilizing system has been found as greatly advantageous, since it allows the fabric edge to be properly finished, without using seams or the like.

Moreover, the application of an adhesive strip allows to perform the fabric finishing operation without altering the resilient characteristics of the fabric and auxiliary materials.

The document JP-A-060 917 767 discloses a laminating apparatus for heat transferring a film to a surface to be protected.
The document US-A-5 851 342 discloses an apparatus and method for bonding a mulitple layer laminate by an adhesive to be arranged therebetween.

### SUMMARY OF THE INVENTION

Accordingly, the aim of the present invention is to provide an apparatus for making adhesive strips of any desired types.

Within the scope of the above mentioned aim, a main object of the invention is to provide such an apparatus which is adapted to transfer either one or two adhesive strips from a paper support to a textile support, at either one or the other or both faces thereof.

Another object of the present invention is to provide such an apparatus allowing to remove exclusively the paper support if the adhesive substance has been applied to the textile or fabric support at one of the faces thereof.

Yet another object of the present invention is to provide such an apparatus which is operatively very flexible, and which, in particular, can be applied to a lot of different types of automatic machines for processing and making cloth articles of manufacture.

According to one aspect of the present invention, the above mentioned aim and objects, as well as yet other objects, which will become more apparent hereinafter, are achieved by an apparatus according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a side elevation view schematically showing the apparatus according to the invention in a configuration thereof for applying an adhesive substance only on a side of a fabric support;
Figure 2 is a further side elevation view schematically showing the apparatus according to the present invention in a configuration thereof for applying an adhesive substance on two sides of a fabric support;
Figure 3 is a perspective view, showing a transfer diagram for transferring an adhesive substance from a paper support to a fabric support therefor;
Figure 4 is a further perspective view, showing a transfer diagram for transferring an adhesive substance from two coaxial paper supports to a fabric support;
Figure 5 is a further perspective view showing a transfer diagram for transferring an adhesive substance from two paper supports, on discrete bobbins, to a fabric support;
   and
Figure 6 is yet another perspective view showing an operating diagram of the apparatus including a single fabric support with a side thereof applied with an adhesive substance and protected by a paper material.

### DESCRIPTION OF THE PREFERRED EMBODIMENTS

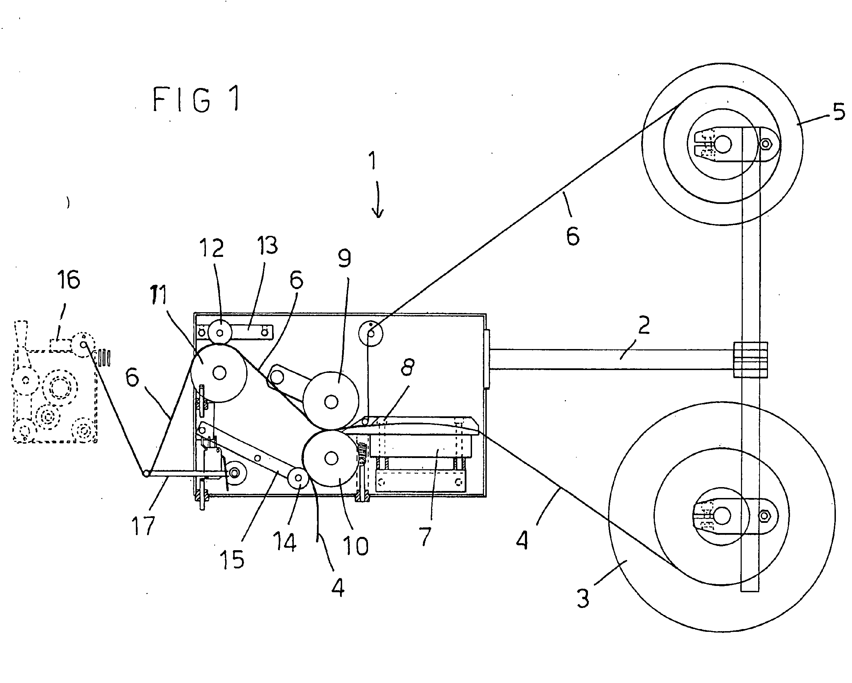

With reference to the number references of figure 1, the apparatus according to the invention, which has been generally indicated by the reference number 1, comprises a supporting framework 2, designed for supporting a bobbin 3 supporting a paper support 4 in turn supporting an adhesive substance, and a fabric or support 6 supporting bobbin 5.

The paper support 4 is supplied to a heating plate 7 including interexchageable transfer guides 8 arranged upstream of an adjustable-pressure transfer wheel 9 operating in abutment against a bottom wheel 10.

The fabric support 6 is operatively driven by two timed entraining or driving wheels 10 and 11.

More specifically, the wheel 11 operates against a small wheel 12 associated with a pressure lever 13 for adjusting the driving of the fabric support 6.

The paper support 4, in turn, is driven through the bottom wheel 10, operating against a cooperating bottom small wheel 14 associated with a pressure lever 15 for adjusting the paper entrainment or driving.

At said bottom wheel 10 a paper support drawing device is provided, the paper support being disposed of after having transferred the adhesive substances to the fabric support 6.

Said fabric support 6, after the application of the adhesive substance thereto, will enter a pulling or tension device 16, by passing through a swinging roller 17 for controlling the fabric material 6 loop.

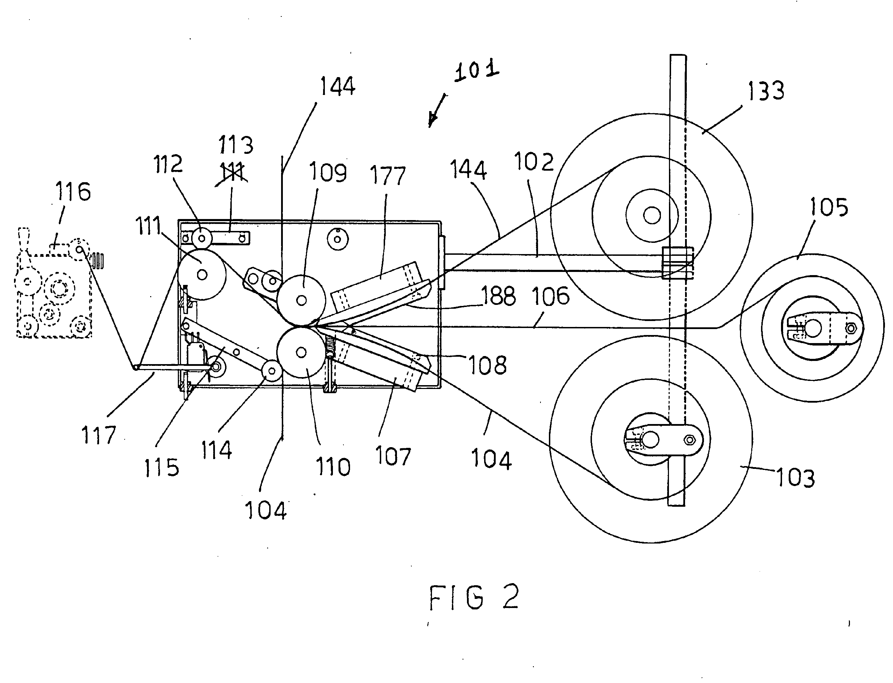

The apparatus shown in figure 2 allows to transfer an adhesive substance coming from two discrete and independent paper supports.

With reference to figure 2, the apparatus 101 comprises a framework support 102, designed for supporting two bobbins, respectively indicated by the reference numbers 103 and 133, each for a paper supported adhesive substance, as respectively indicated by 104 and 144, and a fabric support 106 bobbin 105.

The first paper support 104 is fed to a first heating plate 107 including interexchangeable transfer guides 108 arranged upstream of a transfer wheel 109, with an adjustable pressure, operating in abutment against a bottom wheel 110.

The second paper support 144 is fed to a second heating plate 177, including interexchangeable transfer guides 188, arranged upstream of the adjustable pressure transfer wheel 109, operating in abutment against the bottom wheel 110.

The driving of the fabric support 106 is carried out by a driving wheel 111, operating in abutment against a small wheel 112 associated with a pressure lever 113 for adjusting the driving or displacement of the fabric support 106.

The driving of the paper supports 104 and 144 is performed through the bottom wheel 110, operating in abutment against a bottom small wheel 114 associated with a pressure lever 115 for adjusting the paper material entrainment.

At the bottom wheel 110 is provided a drawing or suction device for drawing the paper support 104 which is disposed of after having transferred the adhesive substance to the fabric support 106.

The second paper support 144 is disposed of through a second drawing device arranged at the transfer wheel 109.

More specifically, the fabric support 106, with the adhesive substance applied thereto, enter a pulling or tension device 116, by passing through a swinging roller 117 controlling the loop of the fabric support 106.

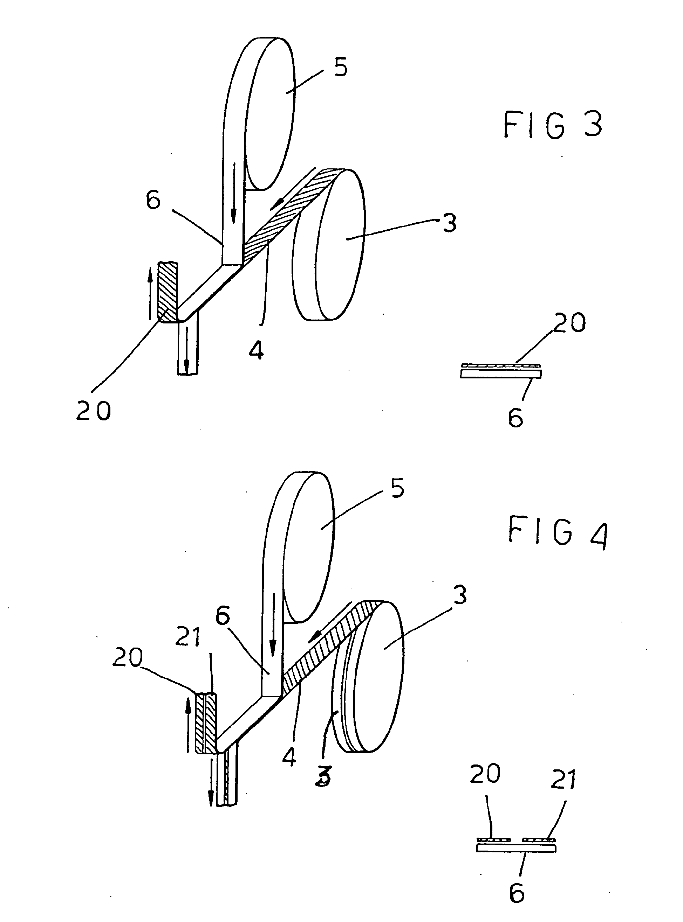

Figures 3-6 show possible operating diagram for applying the adhesive substance to the fabric support by the apparatus according to the invention.

More specifically figure 3 shows an application diagram, which can be carried out through the apparatus 1, in which an adhesive layer 20 is applied on a side of the fabric support 6.

Figure 4 shows a further application diagram to be performed by the apparatus 1, in which two adhesive substance layers 20 and 21, coming from the same paper supports 4, are applied on a side of the fabric support 6.

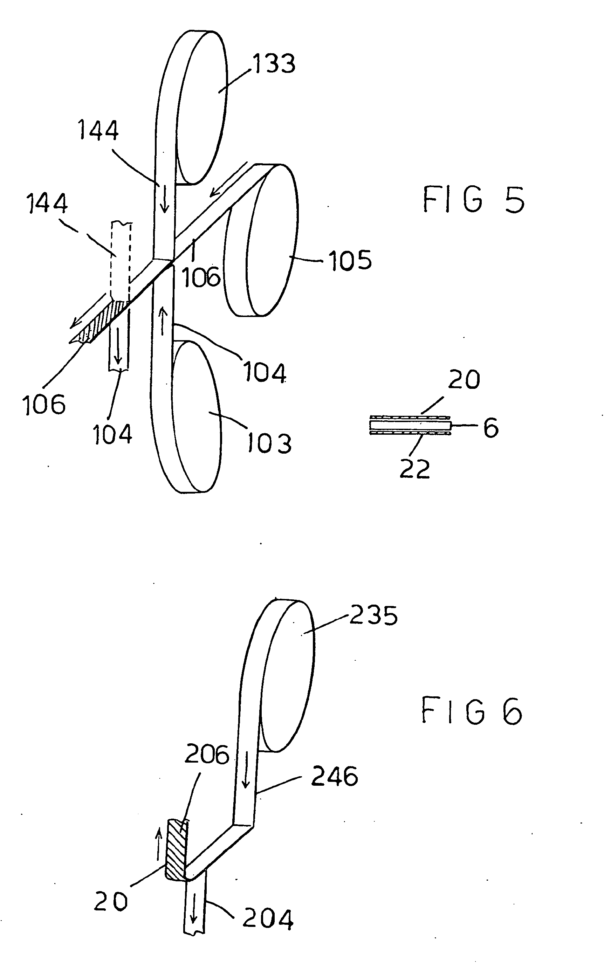

Figure 5 shows a further application diagram to be performed by the apparatus 101, in which two adhesive substance layers 20 and 22, each coming from a respective paper support 104 and 144, are applied on two faces or sides of the fabric support 106.

Figure 6 shows yet another application diagram to be performed by the apparatus 1, in which an adhesive substance layer 20 is arranged between a fabric support 206 and a paper support 204, said supports 206 and 204 forming together a composite support 246 coming from a single bobbin 235.

By the apparatus according to the present invention, the paper support 204 is removed while leaving exposed the adhesive substance layer 20 on the fabric support 206.

In this connection, it should be pointed out that the adhesive substance applied on an adhesive substance support paper, for example a support paper strip can form either one or more continuous layers or it can be applied according to a point by point pattern thereby providing a grid configuration.

It has been found that the invention fully achieves the intended aim and objects.

In fact, the invention has provided an apparatus adapted to supply a fabric support, including one or more heated adhesive layers, ready for use in a finishing machine for finishing a cloth article of manufacture.

Advantageously, the apparatus according to the invention operates in an electropneumatic manner, and allows to transfer either one or two adhesive substances from a paper support to a fabric support, on one or two sides of the latter, and moreover allows to remove only the paper support, if the adhesive substance has been already applied to the fabric support, on said one or two sides thereof.

The subject apparatus can comprise moreover a support arrangement for assembling it on a finishing machine for performing finishing operations on cloth articles of manufacture, and can use a built-in control panel.

Moreover, the subject apparatus provides the possibility of interexchanging transfer guides for transferring paper support strips having a width from 6 to 40 mm.

The heating means included in the apparatus can be programmed with a temperature storing capability.

In practicing the invention, the used materials, as well as the contingent size and shapes, can be any, depending on requirements and the status of the art.

## Claims

1. An apparatus (1) for applying an adhesive substance to a fabric support, **characterized in that** said apparatus comprises a supporting framework (2) adapted to support one or more paper supported adhesive substance bobbins (9) and at least a fabric support bobbin (5) supporting a fabric support (6), and transfer means for transferring said adhesive substance from said paper support (4) to said fabric support (6) on one or more sides of the latter.

2. An apparatus according to claim 1, **characterized in that** said paper support (4) is supplied to a heating plate (7) including interexchangeable transfer guides (8), arranged upstream of an adjustable pressure transfer wheel (9), operating in abutment against a bottom wheel (10).

3. An apparatus according to claim 1 or 2, **characterized in that** said fabric support (6) is driven by two driving wheels (10, 11) one (11) of said driving wheels (10, 11) operating in abutment against a further small wheel (12) associated with a pressure lever (13), for adjusting the driving of the fabric support (6).

4. An apparatus according to one or more of the preceding claims, **characterized in that** said paper support (4) is driven through a bottom wheel (10) operating in abutment against a further bottom small wheel (14), associated with a further pressure lever (15) for adjusting the driving of said paper support (4).

5. An apparatus according to claim 4, **characterized in that** at said bottom wheel (10), a paper material support sucking device is arranged, said paper support (4) being disposed of after having transferred said adhesive substance to said fabric support (6).

6. An apparatus according to one or more of the preceding claims, **characterized in that** said fabric support (6), after having applied said adhesive substance thereto, is supplied to a tensioning device (16), by causing said fabric support (6) to pass through a fabric support control swinging roller (17).

7. An apparatus according to one or more of the preceding claims, **characterized in that** said apparatus allows said adhesive substance, coming from two separated and independent paper supports, to be transferred.

8. An apparatus according to one or more of the preceding claims, **characterized in that** said supporting frame (102) is designed for supporting two bobbins (103, 133), each for a said adhesive substance on a respective paper first and second support (104, 144) and for a fabric support (106).

9. An apparatus according to claim 8, **characterized in that** said first paper support (104) is supplied to a first heating plate (107), including interexchangeable transfer guides (108), arranged upstream of an adjustable pressure transfer wheel (109) operating in abutment against a bottom wheel (110), said first paper support (104) being disposed of by a first drawing device arranged at said bottom wheel (110).

10. An apparatus according to claims 8 and 9, **characterized in that** said second paper support (144) is fed to a second heating plate (177), including interexchangeable transfer guides (188), arranged upstream of said transfer wheel (109), with adjustable pressure, operating in abutment against said bottom wheel (110).

11. An apparatus according to one or more of the preceding claims, **characterized in that** said fabric support (106) is driven through a driving wheel (111) operating in abutment against a further small wheel (112) associated with a pressure lever (113) for adjusting the driving of said fabric support (106).

12. An apparatus according to one or more of the preceding claims, **characterized in that** the second paper support (144) is disposed of by a second drawing device arranged at said transfer wheel (109).

13. An apparatus according to one or more of the preceding claims, **characterized in that** an adhesive substance layer (20) is arranged between a fabric support (206) and a paper support (204), said fabric support (206) and paper support (204) forming in cooperation with one another a composite support (246) delivered from a single bobbin (235).

14. An apparatus according to one or more of the preceding claims, **characterized in that** said apparatus (1) further comprises a supporting assembly for allowing said apparatus to be assembled on a finishing machine for finishing cloth articles of manufacture, and including a built-in control panel built-in in said finishing machine.

15. An apparatus according to one or more of the preceding claims, **characterized in that** said apparatus comprises a plurality of interexchangeable guides for transferring paper support strips having a width from 6 to 40 mm.

16. An apparatus according to one or more of the preceding claims, **characterized in that** the adhesive substance comprises one or more continuous adhesive layers or is applied according to a point by point pattern, thereby providing a pattern grid arrangement.

17. An apparatus according to one or more of the preceding claims, **characterized in that** said apparatus comprises programmable heating means with a heating temperature capability store.

## Patentansprüche

1. Vorrichtung (1) zum Aufbringen eines Klebstoffs auf einen Gewebehalter, **dadurch gekennzeichnet, dass** die Vorrichtung ein Stützrahmenwerk (2), das dazu geeignet ist, eine oder mehrere papiergestützte Klebstoffspulen (9) und zumindest eine Gewebehalterspule (5), die einen Gewebehalter (6) stützt, zu stützen, und Übertragungsmittel zum Übertragen des Klebstoffs von dem Papierhalter (4) auf den Gewebehalter (6) auf eine oder mehrere Seiten des letzteren umfasst.

2. Vorrichtung nach Anspruch 1, **dadurch gekennzeichnet, dass** der Papierhalter (4) einer Heizplatte (7) mit austauschbaren Transferführungen (8) zugeführt ist, die einem einstellbaren Druckübertragungsrad (9) vorgeschaltet sind, welches an ein Bodenrad (10) angrenzend arbeitet.

3. Vorrichtung nach einem der Ansprüche 1 oder 2, **dadurch gekennzeichnet, dass** der Gewebehalter (6) von zwei Triebrädern (10, 11) angetrieben ist, wobei eines (11) der Triebräder (10, 11) an ein weiteres, kleines Rad (12) angrenzend arbeitet, das zum Einstellen des Antriebs des Gewebehalters (6) einem Druckhebel (13) zugeordnet ist.

4. Vorrichtung nach einem oder mehreren der vorhergehenden Ansprüche, **dadurch gekennzeichnet, dass** der Papierhalter (4) über ein Bodenrad (10) angetrieben ist, das an ein weiteres Bodenrad (14) angrenzend arbeitet, das zum Einstellen des Antriebs des Papierhalters (4) einem weiteren Druckhebel (15) zugeordnet ist.

5. Vorrichtung nach Anspruch 4, **dadurch gekennzeichnet, dass** an dem Bodenrad (10) Papiermaterialhalter-Sauggerät angeordnet ist, wobei der Papierhalter (4) nach dem Übertragen des Klebstoffs auf den Gewebehalter (6) beseitigt wird.

6. Vorrichtung nach einem oder mehreren der vorhergehenden Ansprüche, **dadurch gekennzeichnet, dass** der Gewebehalter (6) nach dem Übertragen des Klebstoffs darauf durch Bewirken, dass der Gewebehalter (6) durch eine Gewebehalter-Steuerschwingrolle (17) läuft, einem Spanngerät (16) zugeführt ist.

7. Vorrichtung nach einem oder mehreren der vorhergehenden Ansprüche, **dadurch gekennzeichnet, dass** die Vorrichtung ermöglicht, dass der Klebstoff von zwei separaten und unabhängigen Papierhaltern kommend übertragen wird.

8. Vorrichtung nach einem oder mehreren der vorhergehenden Ansprüche, **dadurch gekennzeichnet, dass** der Stützrahmen (102) zum Stützen von zwei Spulen (103, 133) ausgelegt ist, jede für einen Klebstoff auf einem jeweiligen ersten und zweiten Papierhalter (104, 144) und für einen Gewebehalter (106).

9. Vorrichtung nach Anspruch 8, **dadurch gekennzeichnet, dass** der erste Papierhalter (104) einer ersten Heizplatte (107) mit austauschbaren Transferführungen (108) zugeführt ist, welche einem einstellbaren Druckübertragungsrad (109) vorgeschaltet sind, welches an ein Bodenrad (110) angrenzend arbeitet, wobei der erste Papierhalter (104) durch ein erstes Zuggerät beseitigt ist, das an dem Bodenrad (110) angeordnet ist.

10. Vorrichtung nach einem der Ansprüche 8 oder 9, **dadurch gekennzeichnet, dass** der zweite Papierhalter (144) einer zweiten Heizplatte (177) mit austauschbaren Transferführungen (188) zugeführt ist, welche dem einstellbaren Druckübertragungsrad (109) vorgeschaltet sind, mit einstellbarem Druck, welches an das Bodenrad (110) angrenzend arbeitet.

11. Vorrichtung nach einem oder mehreren der vorhergehenden Ansprüche, **dadurch gekennzeichnet, dass** der Gewebehalter (106) über ein Triebrad (111) angetrieben ist, das an ein weiteres, kleines Rad (112) angrenzend arbeitet, das zum Einstellen des Antriebs des Gewebehalters (106) einem Druckhebel (113) zugeordnet ist.

12. Vorrichtung nach einem oder mehreren der vorhergehenden Ansprüche, **dadurch gekennzeichnet, dass** der zweite Papierhalter (144) durch ein zweites Zuggerät beseitigt wird, das an dem Übertragungsrad (109) angeordnet ist.

13. Vorrichtung nach einem oder mehreren der vorhergehenden Ansprüche, **dadurch gekennzeichnet, dass** eine Klebstoffschicht (20) zwischen einem Gewebehalter (206) und einem Papierhalter (204) angeordnet ist, wobei der Gewebehalter (206) und der Papierhalter (204) in Zusammenwirkung miteinander einen Verbundhalter (246) ausbilden, der von einer einzelnen Spule (235) beliefert ist.

14. Vorrichtung nach einem oder mehreren der vorhergehenden Ansprüche, **dadurch gekennzeichnet, dass** die Vorrichtung (1) ferner eine Stützbaugruppe umfasst, um zu ermöglichen, die Vorrichtung an einer Finishmaschine zum Fertigstellen von Manufakturgewebeartikeln anzubauen, mit einem eingebauten Steuerpult, das in die Finishmaschine eingebaut ist.

15. Vorrichtung nach einem oder mehreren der vorhergehenden Ansprüche, **dadurch gekennzeichnet, dass** die Vorrichtung mehrere austauschbare Führungen zum Überführen von Papierhalterstreifen mit einer Breite von 6 bis 40 mm umfasst.

16. Vorrichtung nach einem oder mehreren der vorhergehenden Ansprüche, **dadurch gekennzeichnet, dass** der Klebstoff eine oder mehrere fortlaufende Klebeschichten umfasst oder gemäß einem Punkt-für-Punkt-Muster aufgebracht ist, wodurch eine Rasteranordnung vorgesehen ist.

17. Vorrichtung nach einem oder mehreren der vorhergehenden Ansprüche, **dadurch gekennzeichnet, dass** die Vorrichtung programmierbare Heizmittel mit einem Heiztemperaturkapazitätsspeicher umfasst.

## Revendications

1. Appareil (1) destiné à appliquer une substance adhésive sur un support en tissu, **caractérisé en ce que** ledit appareil comprend un bâti de support (2) conçu pour supporter une ou plusieurs bobines (9) de substance adhésive supportées par un papier et au moins une bobine de support en tissu (5), qui supporte un support en tissu (6), et des moyens de transfert destinés à transférer ladite substance adhésive dudit support en papier (4) sur ledit support en tissu (6), sur un ou plusieurs côtés de celui-ci.

2. Appareil selon la revendication 1, **caractérisé en ce que** ledit support de papier (4) est alimenté sur une plaque chauffante (7), incluant des guides de transfert interchangeables (8), agencés en amont d'une roue de transfert à pression réglable (9), qui fonctionne en butée contre une roue inférieure (10).

3. Appareil selon la revendication 1 ou 2, **caractérisé en ce que** ledit support en tissu (6) est entraîné par deux roues d'entraînement (10, 11), l'une (11) desdites roues d'entraînement (10, 11) fonctionnant en butée contre une autre petite roue (12) associée à un levier à pression (13), afin d'ajuster l'entraînement du support en tissu (6).

4. Appareil selon une ou plusieurs des revendications précédentes, **caractérisé en ce que** le support de papier (4) est entraîné à travers une roue inférieure (10) qui fonctionne en butée contre une autre petite roue inférieure (14), associée à un autre levier à pression (15) afin d'ajuster l'entraînement dudit support de papier (4).

5. Appareil selon la revendication 4, **caractérisé en ce qu'**au niveau de ladite roue inférieure (10), est agencé un dispositif d'aspiration de support de matériau en papier, ledit support de papier (4) étant jeté après avoir transféré ladite substance adhésive sur ledit support en tissu (6).

6. Appareil selon une ou plusieurs des revendications précédentes, **caractérisé en ce que** ledit support en tissu (6), après avoir appliqué ladite substance adhésive sur celui-ci est alimenté vers un dispositif tendeur (16) en faisant passer ledit support en tissu (6) à travers un rouleau pivotant de contrôle de support en tissu (17).

7. Appareil selon une ou plusieurs des revendications précédentes, **caractérisé en ce que** ledit appareil permet à ladite substance adhésive, qui provient de deux supports de papier séparés et indépendants, d'être transférée.

8. Appareil selon une ou plusieurs des revendications précédentes, **caractérisé en ce que** ledit bâti de support (102) est conçu pour supporter deux bobines (103, 133) chacune pour une dite substance adhésive sur un respectivement premier et un second supports de papier (104, 144) et pour un support en tissu (106).

9. Appareil selon la revendication 8, **caractérisé en ce que** ledit premier support de papier (104) est alimenté vers une première plaque chauffante (107) incluant des guides de transfert interchangeables (108) agencés en amont d'une roue de transfert à pression ajustable (109) qui fonctionne en butée contre une roue inférieure (110), ledit premier support de papier (104) étant jeté par un premier dispositif de tirage agencé au niveau de ladite roue inférieure (110).

10. Appareil selon les revendications 8 et 9, **caractérisé en ce que** ledit second support de papier (144) est alimenté vers une seconde plaque chauffante (177), incluant des guides de transfert interchangeables (188), agencés en amont de ladite roue de transfert (109), avec une pression ajustable, fonctionnant en butée contre ladite roue inférieure (110).

11. Appareil selon une ou plusieurs des revendications précédentes, **caractérisé en ce que** ledit support en tissu (106) est entraîné à travers une roue d'entraînement (111) qui fonctionne en butée contre une autre petite roue (112) associée à un levier à pression (113) afin d'ajuster l'entraînement dudit support en tissu (106).

12. Appareil selon une ou plusieurs de revendications précédentes, **caractérisé en ce que** le second support de papier (144) est jeté par un second dispositif du tirage agencé au niveau de ladite roue de transfert (109).

13. Appareil selon une ou plusieurs des revendications précédentes, **caractérisé en ce qu'**une couche de substance adhésive (20) est agencée entre un support en tissu (206) et un support de papier (204), ledit support en tissu (206) et ledit support de papier (204) formant en coopération l'un avec l'autre un support composite (246) délivré à partir d'une seule bobine (235).

14. Appareil selon une ou plusieurs des revendications précédentes, **caractérisé en ce que** ledit appareil (1) comprend en outre un ensemble de support destiné à permettre que ledit appareil soit assemblé sur une machine de finition afin de faire les finitions des articles de vêtement, et incluant un panneau de commande intégré, qui est intégré dans ladite machine de finition.

15. Appareil selon une ou plusieurs des revendications précédentes, **caractérisé en ce que** ledit appareil comprend une pluralité de guides interchangeables destinés à transférer des bandes de support en papier ayant une largeur comprise entre 6 et 40 mm.

16. Appareil selon une ou plusieurs des revendications précédentes, **caractérisé en ce que** la substance adhésive comprend une ou plusieurs couches adhésives continues ou est appliquée selon un motif point par point, ce qui fournit un agencement en motif de grillage.

17. Appareil selon une ou plusieurs des revendications précédentes, **caractérisé en ce que** ledit appareil comprend des moyens de chauffage programmables munis d'un dispositif de stockage de la capacité de température de chauffage.
